# EUROPEAN PATENT SPECIFICATION

(11) **EP 3 640 869 B1**
(45) Date of publication and mention of the grant of the patent: **06.05.2026**
(21) Application number: 18200992.8
(22) Date of filing: 17.10.2018
(51) Int. Cl.: G06Q 10/06, G06Q 50/06

(54) **METHOD FOR PREDICTING AN ENERGY DEMAND, DATA PROCESSING SYSTEM AND RENEWABLE POWER PLANT WITH A STORAGE**
VERFAHREN ZUR VORHERSAGE DES ENERGIEBEDARFS, DATENVERARBEITUNGSSYSTEM UND ANLAGE FÜR ERNEUERBARE ENERGIE MIT EINEM SPEICHER
PROCÉDÉ PERMETTANT DE PRÉDIRE UNE DEMANDE EN ÉNERGIE, SYSTÈME DE TRAITEMENT DE DONNÉES ET CENTRALE D'ÉNERGIE RENOUVELABLE COMPORTANT UN STOCKAGE

(43) Date of publication of application: 22.04.2020
(73) Proprietor: Deutsches Zentrum für Luft- und Raumfahrt e.V., 51147 Köln (DE)
(72) Inventor: do Amaral Burghi, Ana Carolina, 70469 Stuttgart (DE); Hirsch, Tobias, 70437 Stuttgart (DE)
(74) Representative: Hoeger, Stellrecht & Partner Patentanwälte mbB

(56) References cited:
- US-A1- 2010 023 174
- SUE ELLEN HAUPT ET AL: "Variable Generation Power Forecasting as a Big Data Problem", IEEE TRANSACTIONS ON SUSTAINABLE ENERGY, vol. 8, no. 2, 1 April 2017 (2017-04-01), USA, pages 725 - 732, XP055557328, ISSN: 1949-3029, DOI: 10.1109/TSTE.2016.2604679
- SAAHIL SHENOY ET AL: "Stochastic optimization of power market forecast using non-parametric regression models", 2015 IEEE POWER & ENERGY SOCIETY GENERAL MEETING, 1 July 2015 (2015-07-01), pages 1 - 5, XP055555863, ISBN: 978-1-4673-8040-9, DOI: 10.1109/PESGM.2015.7286589
- WENTAO LI ET AL: "A review on statistical postprocessing methods for hydrometeorological ensemble forecasting : Statistical postprocessing methods", WILEY INTERDISCIPLINARY REVIEWS: WATER, vol. 4, no. 6, 1 November 2017 (2017-11-01), pages e1246, XP055555886, ISSN: 2049-1948, DOI: 10.1002/wat2.1246
- MICHAEL WITTMANN ET AL: "Methodology for optimized operation strategies of solar thermal power plants with integrated heat storage", SOLAR ENERGY, PERGAMON PRESS. OXFORD, GB, vol. 85, no. 4, 30 November 2010 (2010-11-30), pages 653 - 659, XP028173217, ISSN: 0038-092X, [retrieved on 20101203], DOI: 10.1016/J.SOLENER.2010.11.024
- ANTONANZAS J ET AL: "Review of photovoltaic power forecasting", SOLAR ENERGY, ELSEVIER, AMSTERDAM, NL, vol. 136, 7 July 2016 (2016-07-07), pages 78 - 111, XP029691109, ISSN: 0038-092X, DOI: 10.1016/J.SOLENER.2016.06.069

## Description

The invention relates to a method for predicting an energy demand for operating a renewable power plant with a storage using a machine learning device.

The invention further relates to a data processing system adapted for carrying out the method of the invention.

The invention further relates to a renewable power plant with a storage operated according to a prediction of an energy demand according to a method of the invention and/or comprising a data processing system of the invention.

A derivation of the optimization problem and its adaptation to dynamic programming is known from the scientific publication "Methodology for optimized operation strategies of solar thermal power plants with integrated heat storage" by M. Wittmann et al.

The scientific publication "Optimized dispatch in a first-principles concentrating solar power production model" by M. J. Wagner et al., Applied Energy 203 (2017) 959-971, discloses the integration of a dispatch optimization model into a detailed techno-economic analysis tool, wherein the mixed-integer linear program produces an optimized operation strategy, historically determined via a heuristic.

The scientific article "Variable Generation Power Forecasting as a Big Data Problem" by Sue Ellen Haupt et al. (published in IEEE TRANSACTIONS ON SUSTAINABLE ENERGY, vol. 8, no. 2, APRIL 2017) discloses an example system that has been used for utility applications and how it has been configured to meet utility needs while addressing the Big Data issues.

The presentation "Stochastic Optimization of Power Market Forecast Using Non-Parametric Regression Models" by S. Shenoy et al. (presented on the IEEE POWER & ENERGY SOCIETY GENERAL MEETING in July 2015) discloses a methodology for stochastic optimization using data-driven models. Non-parametric models of multivariate distributions based on multiple quantile regressions, built from historical data sets are used. The statistics, such as cost expectation, required for the stochastic optimization are computed numerically using these models.

The "review on statistical postprocessing methods for hydrometeorological ensemble forecasting" by Wentai Li et al. (published in WIREs Water 2017, vol. 4, pages 1 to 24) discloses commonly used statistical postprocessing methods for both meteorological and hydrological forecasts.

However, renewable power plants with a storage operated according to known prediction methods only service a renewable energy market, as normally accuracy of the prediction is too low in order to participate in a wholesale electricity market in which penalties for non-fulfillment of an actual energy demand are imposed and/or not being able to fulfill a contract is penalized.

It is an object of the present invention to provide a reliable method for the predicting an energy demand with improved accuracy for operating a renewable power plant with a storage.

This object is achieved by providing a method for predicting an energy demand for operating a renewable power plant with a storage according to claim 1.

The method preferably provides a prediction of an energy demand of a specific renewable power plant, preferably based on a given energy demand of the whole electricity system.

The predicted energy demand is preferably a predicted demand of production of one particular renewable power plant.

Due to the uncertainty post-processing using machine learning techniques, the method of the invention can provide an automatic system for generating energy schedules. Preferably, the method provides for an unsupervised learning system.

In accordance with the method, a renewable power plant with a storage is preferably operated with a high accuracy, in particular so that it can service the wholesale energy market together with conventional power plants.

Alternatively, the method is suitable for predicting an energy demand of a non-renewable power system, e.g., a power-heat-power system.

The energy demand according to a perfect forecast preferably is an energy demand calculated based on a perfect input, i.e., without uncertainties.

The actual energy demand is influenced by various factors; inter alia, uncertainties, in particular resource-dependent uncertainties and/or market-dependent uncertainties. An example for a resource-dependent uncertainty is a weather forecast. An example for a market-dependent uncertainty is an electricity price uncertainty.

In accordance with the prediction of the energy demand, preferably a time-dependent dispatch schedule is obtained. The time-dependent dispatch schedule preferably shows an amount of energy, e.g., in Megawatt MW, that is to be sent from the renewable power plant to the grid dependent on the time of the day.

If less energy than given in the predicted demand is produced by a renewable energy source of the power plant at a certain time, energy from the storage of the renewable power plant is used to generate electricity which is sent to the grid. If more energy than the predicted demand is produced by the renewable energy source at a certain time, the excess amount of energy is sent to the storage to be used to generate electricity when not enough energy is produced by the renewable energy source.

Due to the storage of the renewable power plant, the operation is not dependent only on the energy production of the source. The storage preferably forms a balancing device for balancing energy harvested from the source and the generated energy according to the energy demand.

The machine learning techniques are preferably mathematical methods and/or algorithms performed by the machine learning device.

Preferably, predictive modelling techniques are used by the machine learning device.

In accordance with one example, a decision tree is developed in order to display an algorithm for an assessment of how much the set of forecasted variables deviates from an energy demand according to a perfect forecast, especially for the specific day for which the prediction is made. Alternatively, other methods, such as neural networks, are used as predictive modelling techniques.

Predictive modelling techniques are preferably techniques that use statistics or other mathematical calculations for predicting an output. In particular, a model within predictive modelling is chosen in order to guess a possible output depending on a given input. Preferably classification and/or regression trees as special decision trees or neural networks are used.

In a decision tree, preferably a tree-like model is used, including decision nodes. In accordance with a decision tree, the strategy most likely to result in a goal is identified. Within a building phase of the decision tree, decision rules are defined and/or identified.

An accuracy of the method preferably improves over time as the machine learning device is trained by using deterministic and/or probabilistic methods.

The machine learning device preferably produces a data-driven output.

Machine learning techniques preferably comprise building an artificial learning device and/or generating a computer-based decision tool.

The uncertainty post-processing is preferably an uncertainty post-processing phase, in particular chronologically, following a phase in which the set of forecasted variables is generated and/or calculated.

The uncertainty post-processing in particular comprises building up an artificial learner based on known data (training data sets) as well as an application of the machine learning device on unknown data (testing data sets).

With regard to predicting an energy demand, the conformance of the prediction with an actual energy demand is crucial as in the wholesale electricity market penalties are imposed if the predicted energy demand is not met.

The prediction of the energy demand is preferably provided in the form of a set of variables, comprising the amount of energy per hour that has to be sent to the grid.

The method for predicting an energy demand is preferably automatic and/or human decisions for risk assessment are dispensable. The machine learning device preferably uses an artificial intelligence and/or creates an artificial learner.

According to the invention, a variable is preferably a data point, e.g., a data point of a curve. A set of variables may comprise one or more variables, e.g., a time sequence of variables.

Due to the use of historical data by the machine learning device, the method preferably provides for predictions of the energy demand with increasing accuracy over time with regard to a length of at least one training data set.

In addition, the method preferably provides for a high flexibility with regard to types of optimization methods used within the optimization algorithm and/or with regard to system models chosen according to the specific renewable power plant system with a storage.

In particular, optimization methods comprise mathematical methods, e.g., linear optimization methods and/or dynamic optimization methods and/or heuristic optimization methods.

By the method of the invention, preferably an energy demand for energy of a concentrated solar power plant, a solar photovoltaic plant, or a wind power plant is predicted.

Preferably, the optimization algorithm is performed by an optimization algorithm device and a set of weather forecast variables and/or a set of electricity price forecast variables are used as input for the optimization algorithm device.

Sets of uncertainty-based variables are preferably sets of variables that take an uncertainty resulting from unforeseeable events and/or factors into account.

The set of weather forecast variables is a set of uncertainty-based variables.

The set of electricity price based variables is a set of uncertainty-based variables.

The set of forecasted variables preferably is a forecasted energy schedule.

Preferably, the set of forecasted variables is an output of the optimization algorithm, in particular performed by the optimization algorithm device.

In addition or alternatively, preferred delivery hours and/or average deviation from an end user consumption to an energy production are taken into account by the machine learning device and/or the optimization algorithm device.

It can be advantageous if methods for demand analysis are used by the optimization algorithm device, in particular deterministic methods and/or probabilistic methods and/or heuristic methods and/or combinations thereof.

The uncertainty post-processing in particular comprises an implementation phase in which the machine learning device is implemented for predicting a deviation of the set of forecasted variables from a future energy demand according to a perfect schedule.

The development phase and the implementation phase preferably relate to a process in which the machine learning device is built, wherein the development phase is a learning phase and the implementation phase is an application phase.

In addition, the development phase and the implementation phase preferably relate to a sequential and/or parallel performance of two phases within the uncertainty post-processing, in particular within the application of the (trained) machine learning device.

The energy demand according to a perfect forecast is in particular an energy demand without uncertainty-based input of a particular hour or a particular day for which a prediction according to an embodiment of the method is made.

Preferably, during the development phase, decision patterns are generated and embedded in the machine learning device. In particular, a learning system algorithm is performed by the machine learning device.

Within the development phase of the uncertainty post-processing, in particular rules for decision making and/or a patterned recognition are developed within and/or by the machine learning device.

The development phase is preferably performed before the first implementation phase.

Preferably, the machine learning device is trained in that deviations of at least one predicted set of variables and at least one energy demand according to a perfect forecast from the past are compared. The predicted set of variables in particular is a set of deviation-to-perfect-based variables.

During the development phase, preferably a decision tree is generated by and/or within the machine learning device. Preferably, the machine learning device comprises a decision tree building algorithm device for building the decision tree by performing a decision tree building algorithm, in particular using fuzzy logic.

Fuzzy logic is a form of many-valued logic in which the truth values of variables may be any real number between 0 (false) and 1 (true), wherein the value may range between completely true and completely false. In contrast to classical mathematical models, non-numeric values may be used, especially in order to facilitate the expression of rules and facts within a fuzzy logic model.

The decision tree especially contains conditional control statements. In particular, the decision tree is an artificial learner.

According to a preferred embodiment, classes for the sets of variables used within the development phase and/or implementation phase are defined by a class definition algorithm device which performs a class definition algorithm.

Preferably a fuzzy c-mean clustering algorithm is performed by a fuzzy c-mean clustering algorithm device. The classes defined are preferably combined with a fuzzy decision tree. The classes preferably correspond to the training data sets.

The training data sets for the development phase within the uncertainty post-processing comprise one or more of the following sets of
variables: a set of deviation-to-mean-based variables, a set of deviation-to-persistence-based variables, a set of day-of-the-year-based variables, a set of time-step-priority-based variables and a set of deviation-to-perfect-based variables.

Training data sets are preferably historical data, especially of a particular year in the past. This has the advantage that seasonal variations can be taken into account, e.g., seasonal variations in sunshine hours for solar power plants or seasonal variations in wind strength for wind power plants.

The set of deviation-to-mean-based variables especially takes a relation of a specific set of forecasted variables and an ensemble of sets of forecasted variables in the past into account. The set of deviation-to-mean-based variables preferably influences the decisions of the machine learning device if probabilistic methods are used in the development phase. If a deterministic set of forecasted variables is used in the development phase, the set of deviation-to-mean-based variables is preferably zero.

The set of deviation-to-persistence-based variables is in particular used in order to generate a set of forecasted variables assuming a persistence. A deviation of the generated (persistence) set of variables and the set of forecasted variables results in the set of deviation-to-persistence-based variables.

The persistence set of variables preferably considers, in particular weather, observations of a previous day as an expected forecast for the following day. The persistence set of variables is usually used when no other forecast is available, in particular it is used as a benchmark for forecasting.

The set of day-of-the-year-based variables in particular takes seasonal influences in the energy demand and/or energy production into account.

The set of time-step-priority-based variables in particular weighs time steps in the prediction according to a price level of the energy on the energy market at this particular time step. The higher the price is at a time step, e.g., at an hour, the higher the assigned priority.

The set of deviation-to-perfect-based variables in particular compares a certain set of forecasted variables (in the past) with the respective energy demand according to a perfect forecast on this day (in the past) and/or determines the deviation of the set of forecasted variables (in the past) with the corresponding energy demand according to a perfect forecast (in the past).

Preferably, the set of deviation-to-perfect-based variables is an input during the development phase and/or an output during the implementation phase, when the machine learning device is applied to unknown data. For the sake of readability, the set of deviation-to-perfect-based variables as an output within the implementation phase is subsequently referred to as "predicted deviation".

In the above-mentioned preferred embodiment using fuzzy logic, after the classes have been defined during the development phase, preferably - as already mentioned - a decision tree is built, in particular a classification or a regression tree, by a decision tree building algorithm device which performs a decision tree building algorithm.

Afterwards, preferably a decision tree pruning algorithm is performed by a decision tree pruning algorithm device. The decision tree pruning algorithm results in a less complex decision tree than the one built by the decision tree building algorithm, in particular an output of the decision tree pruning algorithm is a decision tree with the lowest possible costs for the operation of the renewable power plant with a storage.

Within the development phase according to the preferred embodiment using fuzzy logic, preferably decision rules are extracted, in particular from a pruned decision tree. Decision rules are preferably extracted by the application of a decision rules extraction algorithm performed by a decision rules extraction algorithm device.

In particular, due to the development phase, the machine learning device is able to interpret unknown data sets (testing data sets) by using fuzzy logic.

Preferably, the one or more of the following devices used during the development phase are comprised by the machine learning device: class definition algorithm device, decision tree building algorithm device, decision tree pruning algorithm device and decision rules extraction algorithm device.

Preferably, in an implementation phase of the uncertainty post-processing, one or more testing data sets form an input of a machine learning device, in particular influencing decision making in the uncertainty post-processing.

The testing data sets are preferably data sets that have not been used during the development phase, in particular such that a performance of the machine learning device can be tested.

In particular, testing data sets for the implementation phase within the uncertainty post-processing comprise one or more of the following sets of variables: a set of deviation-to-mean-based variables, a set of deviation-to-persistence-based variables, a set of day-of-the-year-based variables and a set of time-step-priority-based variables.

Preferably, within the implementation phase of the uncertainty post-processing, a predicted deviation of the set of forecasted variables is calculated, in particular as an output. The predicted deviation and the set of forecasted variables are preferably used as an input for an adjustment algorithm performed by an adjustment algorithm device, in particular within the implementation phase.

According to a preferred embodiment, each of the one or more testing data sets is classified by a classification algorithm performed by a classification algorithm device. The classes preferably correspond to classes already defined within the development phase, in particular fuzzy clusters. It is particularly preferred that each variable within a set of variables of the testing data sets is rated in accordance with its membership degree to a specific class.

Preferably a decision tree interference algorithm, in particular a fuzzy decision tree interference algorithm, performed by a decision tree interference algorithm device takes the rules derived from the decision tree built during the development phase and the membership degree into account. As an output, preferably the predicted deviation is obtained and/or used as an input for the adjustment algorithm performed by the adjustment algorithm device.

The classification algorithm device and/or the decision tree interference algorithm device are preferably comprised by the machine learning device.

The predicted energy demand is preferably an output of the adjustment algorithm performed by the adjustment algorithm device.

The predicted deviation and/or the prediction of the energy demand are preferably in the form of a set of variables, respectively.

In accordance with a preferred embodiment, the accuracy of the prediction of the energy demand is about 20% or more, preferably about 25% or more, higher than the accuracy of the set of forecasted variables with regard to an energy demand according to a perfect forecast.

Preferably, each time step, more preferably each hour of a day, is treated as a single decision problem.

In accordance with a preferred embodiment of the invention, the renewable power plant with a storage is a concentrated solar power plant, in particular with a ten-hour storage, e.g. in the form of a thermal storage system.

For example, a 100 MW solar thermal power plant is preferably equipped with a storage system that allows 10 h (hours) of operation from the storage.

Alternatively, the renewable power plant with a storage is a solar photovoltaic plant, e.g., with a battery system as storage, or a wind power plant, e.g., with a battery storage system as storage.

Preferably, the method has one or more of the following advantages:
- the method of the invention enables an effective consideration of weather uncertainties in dispatch planning; and/or
- a flexible dispatch can be predicted.

The method preferably provides an intelligent dispatch planning strategy for a renewable power plant with a storage.

The invention further relates to a data processing system adapted for carrying out a method according to the invention.

The data processing system preferably comprises a data processing apparatus and/or a data processing device. In particular, the data processing system is a data processing apparatus or a data processing device.

The invention further relates to a renewable power plant operated according to a prediction of an energy demand according to a method according to the invention and/or comprising a data processing system according to the invention.

The features and/or advantages explained in conjunction with the method of the invention are valid for the data processing system of the invention and/or the renewable power plant with a storage of the invention, too.

These and further preferred embodiments of the invention are explained in more detail hereinafter taken in conjunction with the drawings.

In detail:
- Figure 1: shows a schematic flow chart illustrating the different phases of an embodiment of a method for predicting an energy demand for operating a renewable power plant with a storage;
- Figure 2: shows a schematic flow chart of a development phase in an uncertainty post-processing within the embodiment illustrated in Figure 1;
- Figure 3: shows a schematic flow chart of an implementation phase of the uncertainty post-processing within the embodiment illustrated in Figure 1 and Figure 2;
- Figure 4: shows a schematic flow chart of a development phase, wherein a decision tree is used;
- Figure 5: shows a schematic flow chart of an implementation phase, wherein a decision tree is used;
- Figure 6: shows a schematic representation of a structure of a concentrated solar power plant to be operated according to the prediction of an energy demand obtained by a method of the invention;
- Figure 7: shows a schematic representation of a structure of a solar photovoltaic plant to be operated according to a prediction of an energy demand obtained by a method of the invention;
- Figure 8: shows a schematic representation of the structure of a wind power plant to be operated according to the prediction of an energy demand obtained by a method of the invention;
- Figure 9: shows a diagram in which a set of forecasted variables, a prediction according to a method of the invention and an energy demand according to a perfect forecast are plotted; and
- Figure 10: shows a block diagram in which an accuracy of a set of forecasted variables and a prediction according to a method of the invention of two successive years are compared in relation to an energy demand according to a perfect forecast.

Identical or functionally equivalent elements are labeled with the same reference numeral in all Figures.

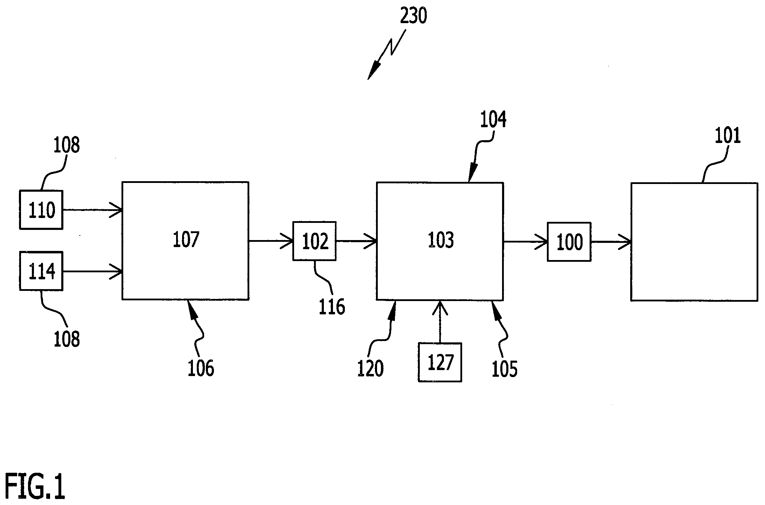

An embodiment of the method for predicting an energy demand 100 for operating a renewable power plant with a storage 101 illustrated in Figures 1 to 3 comprises a first phase in which a set of forecasted variables 102 is calculated and a second phase in which the set of forecasted variables 102 is used as an input and adjusted according to machine learning techniques 104 within an uncertainty post-processing phase 105.

In the first phase, an optimization algorithm 107 is performed by an optimization algorithm device 106, wherein one or more sets of uncertainty-based variables 108 are used as an input. Preferably, two sets of uncertainty-based variables 108 are used, more preferably, a set of weather forecast variables 110, especially a weather forecast giving weather data per hour, and a set of electricity price forecast variables 114, especially an electricity price forecast giving an electricity price forecast per hour, are used as input for the optimization algorithm device 106.

By the optimization algorithm device 106, according to mathematical methods, preferably a heuristic, rules-based approach, the set of forecasted variables 102 is generated as an output. The set of forecasted variables 102 is preferably a forecasted schedule 116 giving a forecasted energy demand per hour.

It can be advantageous if the optimization algorithm device 106 uses deterministic and/or probabilistic and/or heuristic methods for generating the set of forecasted variables 102.

The form of the set of forecasted variables 102 preferably depends on the method and/or model used by the optimization algorithm device 106. For example, if the optimization algorithm device 106 uses a probabilistic method, the set of forecasted variables 102 comprises various possible forecasted schedules 116.

Within the uncertainty post-processing phase 105, preferably the set of forecasted variables 102 is used as an input and/or a machine learning device 120 calculates the prediction of an energy demand 100 as an output using machine learning techniques 104.

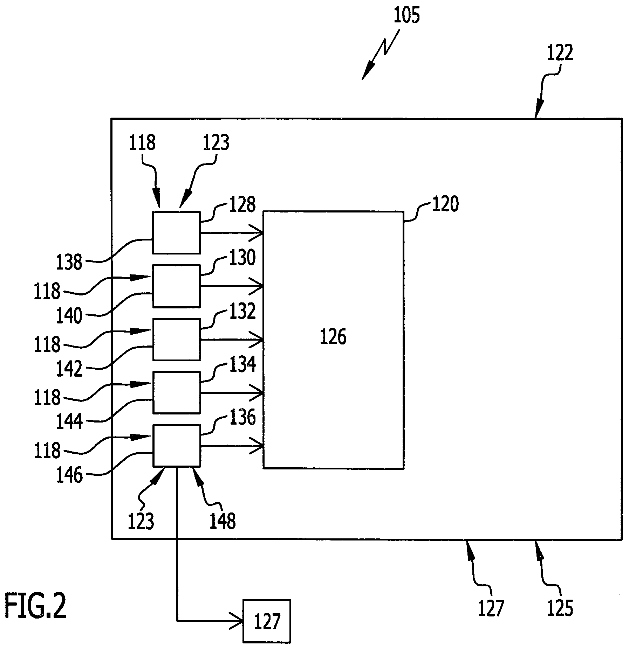

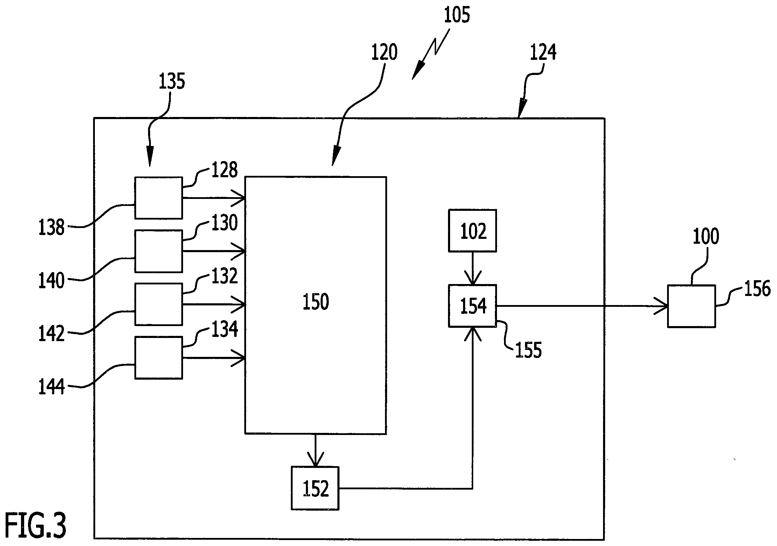

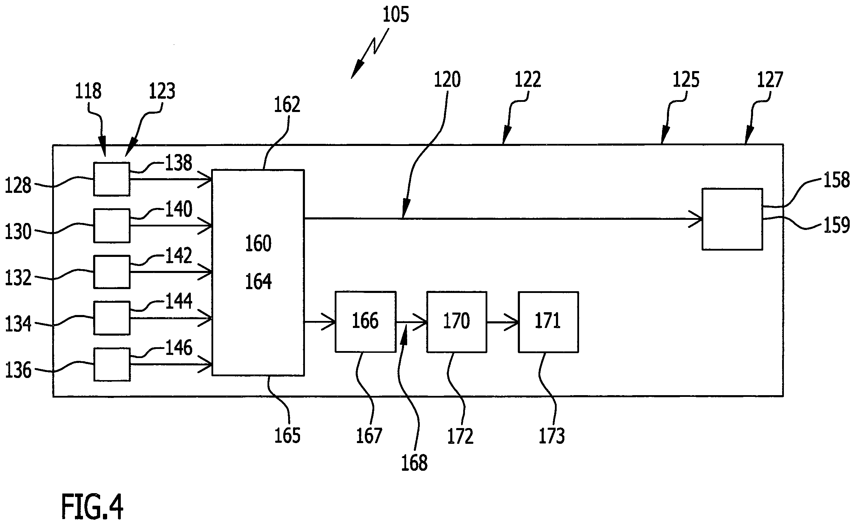

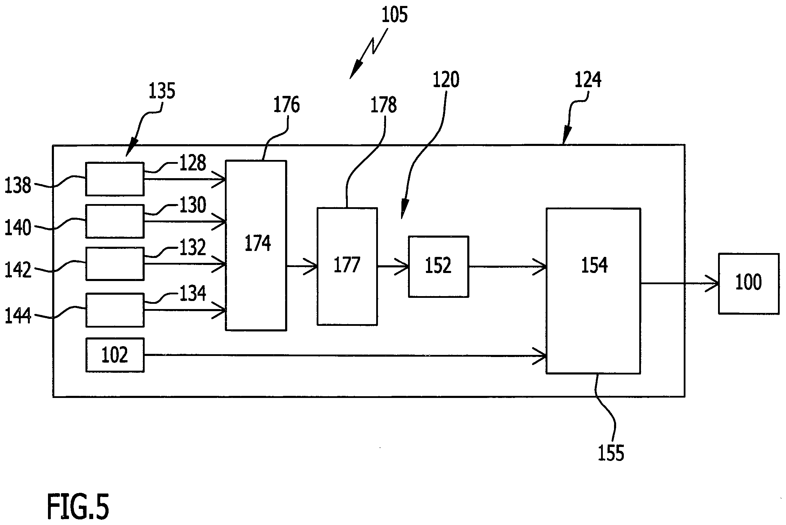

According to a preferred embodiment, the uncertainty post-processing phase 105 comprises a development phase 122 (illustrated in Figures 2 and 4) and an implementation phase 124 (illustrated in Figures 3 and 5).

The development phase 122 and the implementation phase 124 are preferably both performed completely or partially by the machine learning device 120.

Preferably, the method is used repeatedly for predictions of energy demands 100 for days, especially consecutive days. For the first prediction of an energy demand 100, in particular the development phase 122 is performed prior to the implementation phase 124, wherein especially during the development phase 122 an artificial learner and/or artificial intelligence device 125 is generated by the machine learning device 120 and/or as a part of the machine learning device 120. The artificial learner and/or an artificial intelligence device 125 in particular comprises a decision pattern 127 based on historical data 123, i.e., at least one training data set 118.

After the artificial intelligence device 125 has been applied to a set of forecasted variables 102 once, the development phase 122 and the implementation phase 124 are preferably performed at least partially simultaneously by the machine learning device 120.

During the implementation phase 122, in particular by an artificial intelligence device 125 and/or the machine learning device 120, decision patterns 127 are developed, preferably based on at least one training data set 118, in particular more than one training data set 118.

According to a preferred embodiment, the training data sets 118 - which are used as an input - comprise a set of deviation-to-mean-based variables 128, a set of deviation-to-persistence-based variables 130, a set of day-of-the-year-based variables 132, a set of time-step-priority-based variables 134 and a set of deviation-to-perfect-based variables 136.

The set of deviation-to-mean-based variables 128, preferably a set of deviation-to-mean variables 138, in particular reflects the position of the selected forecasted schedule 116 in comparison to an ensemble of forecasted schedules in embodiments in which probabilistic methods are used.

The deviation-to-persistence-based variables 130, preferably a set of deviation-to-persistence variables 140, is in particular obtained by predicting a set of variables assuming persistence and by determining a deviation of the persistence set of variables from the forecasted set of variables in particular from the forecasted schedule 116.

The set of day-of-the-year-based variables 132, preferably a set of day-of-the-year variables 142, takes seasonal variations in the energy demand into account.

The set of time-step-priority-based variables 134, preferably a set of time-step-priority variables 144, in particular takes an optimal market situation into account. According to the set of time-step-priority-based variables 134, the particular time step is prioritized in comparison to other time steps of the forecasted schedule 116. Preferably, a higher priority is assigned to time steps in which higher prices on the energy market are expected. Time steps with higher prices have a higher priority and preferably the time steps are classified according to the prices that can be expected from the highest price to the lowest price.

The set of deviation-to-perfect-based variables 136, preferably a set of deviation-to-perfect variables 146, in particular compares a calculated forecasted schedule 116 with an energy demand according to a perfect forecast 148 of the past that has been archived and that is now used as an input.

During the development phase 122, preferably a learning system algorithm 126 is performed by the machine learning device 120.

The set of deviation-to-mean-based variables 128, the set of deviation-to-persistence-based variables 130, the set of day-of-the-year-based variables 132 and the set of time-step-priority-based variables 134 are used as inputs for the machine learning device 120 during the development phase 122 while the set of deviation-to-perfect-based variables 136 improves during repetition of the development phase 122 and especially influences the decision pattern 127 within the implementation phase 124.

In addition or alternatively, the decision pattern 127 is preferably also influenced by the other training data sets 118.

During the implementation phase 124 (Figure 3), the decision pattern 127 is preferably applied and/or used as an input for the machine learning device 120 in order to improve the forecasted schedule 116.

During the implementation phase 124, a set of deviation-to-mean-based variables 128, a set of deviation-to-persistence-based variables 130, a set of day-of-the-year-based variables 132 and a set of time-step-priority-based variables 134 preferably are used as an input for the machine learning device 120, in particular as testing data sets 135. The testing data sets 135 and the training data sets 118 are in particular from different time periods.

Preferably, the machine learning device 120 performs a learning system evaluation algorithm 150 from which a predicted deviation 152 from an expected energy demand according to a perfect forecast 148 is calculated as an output. The predicted deviation 152 is used as an input for the application of an adjustment algorithm 154 which is performed by an adjustment algorithm device 155.

The predicted deviation 152 and the set of forecasted variables 102 preferably form an input of the adjustment device 155. By the adjustment device 155, the prediction of the energy demand 100, especially in the form of a final electricity delivery schedule 156, is calculated as an output.

In Figure 4, a preferred development phase 122 in which a decision tree 168 is used is illustrated. As in Figure 2, preferably as training data sets 118 a set of deviation-to-mean-based variables 128, a set of deviation-to-persistence-based variables 130, a set of day-of-the-year-based variables 132, a set of time-step-priority-based variables 134 and a set of deviation-to-perfect-based variables 136 are used as input. In cases in which deterministic methods are used, a set of deviation-to-mean-based variables 128 is 0 (zero).

During the development phase 122 illustrated in Figure 4, preferably a class definition algorithm 160 is performed by a class definition algorithm device 162 in order to define classes in which the parameters and/or variables of the input are grouped. In particular, a fuzzy c-mean clustering algorithm 164 is performed by a fuzzy c-mean clustering algorithm device 165 using fuzzy logic. Preferably the classes correspond to the training data sets 118. In embodiments, in which a fuzzy c-mean clustering algorithm 164 is used, the classes 158 defined by the class definition algorithm 160 are preferably clusters 159.

After the classes 158, in particular clusters 159, have been defined by the class definition algorithm device 162, preferably a decision tree building algorithm 166 is performed by a decision tree building algorithm device 167. Preferably, within the application of the decision tree 168, fuzzy logic is used. Within the decision tree building algorithm 166, the input data is preferably divided into small packages from which the most relevant variables are isolated, more preferably by using a recursive partitioning approach. These most important variables in particular are set as decision points (decision nodes) in a resulting decision tree 168.

The decision tree 168 is preferably adapted according to a decision tree pruning algorithm 170 performed by a decision tree pruning device 172. In particular, a complexity of the decision tree 168 is reduced and/or an accuracy is improved by reducing an overfitting of too many decision points (decision nodes).

In particular, as a successive step, decision rules are extracted by a decision rules extraction algorithm 171 performed by a decision rules extraction algorithm device 173. Within the decision rules extraction algorithm 171, the decision points (decision nodes) of the decision tree 168 are interpreted, especially by classical methods and/or deterministic methods and/or fuzzy logic interference.

In particular, a defuzzification is performed resulting in a set of numeric values to be applied to the set of forecasted variables 102.

Rules extracted by the decision rules extraction device 173 for example comprise:
- if a variable of the set of deviation-to-persistence-based variables 130 is very positive and if a variable of the set of day-of-the-year-based-variables 132 belongs to winter, then the corresponding variables of the deviation-to-perfect-based variables 136 are very positive; and/or
- if a variable of the set of deviation-to-persistence-based variables 130 is very positive and if a variable of the set of day-of-the-year-based-variables 132 belongs to autumn or summer, then the corresponding variables of the deviation-to-perfect-based variables 136 are neutral.

Preferably, after the machine learning device 120 has been trained in the development phase 122, for example as described in connection with Figure 4, the uncertainty post-processing algorithm 103 is applied to testing data sets 135 which are unknown to the machine learning device 120.

As can be seen in Figure 5, during the implementation phase 124, preferably a classification algorithm 174 is performed on the input by a classification algorithm device 176. Preferably the testing data sets 135 are classified according to the classes 158 defined during the development phase 122, in particular according to classes 158 defined by class definition algorithm device 162, e.g., clusters 159 defined by the fuzzy c-mean clustering algorithm device.

Successively, the classes 158 are preferably applied to the decision tree 168 by performing a decision tree interference algorithm 177 by a decision tree interference algorithm device 178. For these applications, in particular fuzzy logic is used.

Afterwards, preferably a defuzzification is performed resulting in numerical values.

The classification algorithm 174 and/or the decision tree interference algorithm 177 preferably correspond to the learning system evaluation algorithm described in conjunction with Figure 3.

In particular, as an output the predicted deviation 152 of the set of forecasted variables 102 from an expected energy demand according to a perfect forecast 148 is obtained.

In order to obtain the prediction of the energy demand 100, especially the adjustment algorithm 154 in order to adjust the set of forecasted variables 102 with respect to the predicted deviation 152, is applied by the adjustment algorithm device 155.

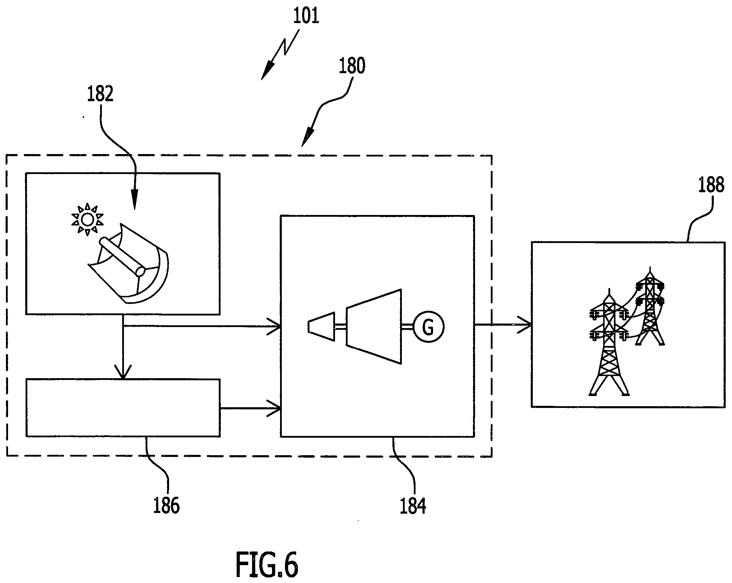

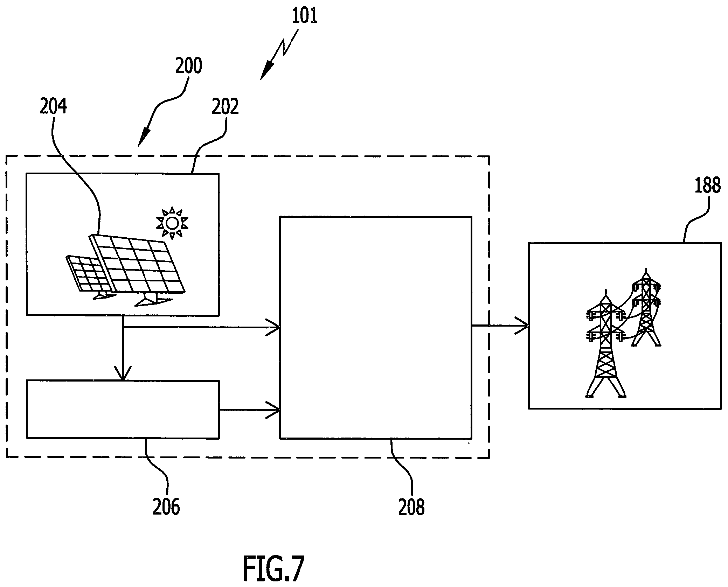

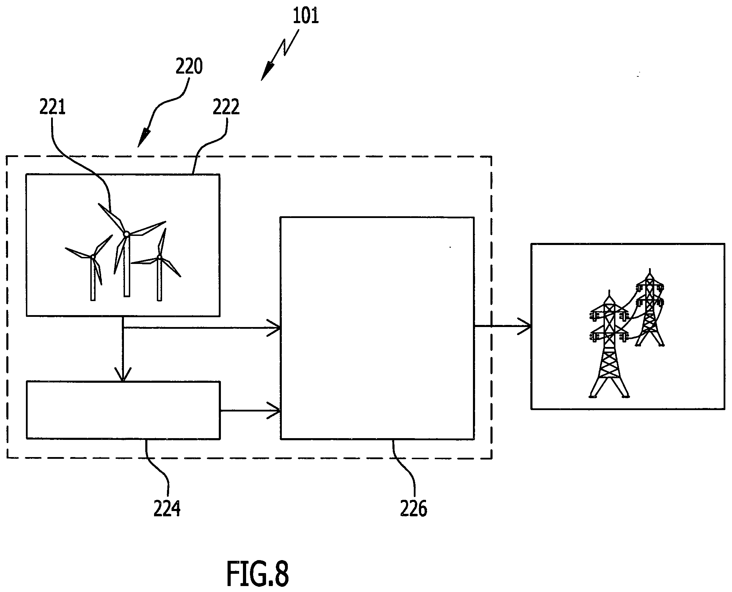

As a renewable power plant with a storage 101, preferably a concentrated solar power plant 180 (Figure 6), a solar photovoltaic plant 200 (Figure 7) or a wind power plant 220 (Figure 8) is suitable.

In the concentrated solar power plant 180, as schematically shown in Figure 6, preferably thermal energy of the sun is collected on at least one solar field 182 using solar collectors. In particular mirrors and/or lenses are used to concentrate thermal energy onto a small area. The thermal energy is preferably partially sent to a power block device 184 and/or partially sent to a thermal storage system 186. Within the thermal storage system 186, the thermal energy is stored until - when the need arises - it is sent to the power block device 184.

Electrical energy is in particular generated within the power block device 184 when the concentrated thermal energy is converted to heat, which preferably drives a heat engine connected to an electrical power generator and/or powers a thermochemical reaction.

Electrical energy from the power block device 184 is preferably sent to the electricity grid 188 when demanded.

In the solar photovoltaic plant 200 (Figure 7), preferably thermal energy from the sun is collected within a solar field 202 comprising at least one photovoltaic module 204 (schematically shown). Within the at least one photovoltaic module 204, the thermal energy is converted to electrical energy and preferably sent partially or completely to a battery storage system 206.

In cases in which the electrical energy is sent partially to the battery storage system 206, the rest of the electrical energy is sent to a transformer device 208. From the transformer device 208, energy is preferably sent to an electricity grid 188.

In cases in which the electrical energy is completely sent to the battery storage system 206, it can be sent from the battery storage system 206 to the transformer device 208, if necessary.

If the electrical energy is directly needed on the energy market, it is possible that the electrical energy is completely sent from the solar field 202 to the transformer device 208.

The transformer device 208 preferably converts the electrical energy output from DC to AC, and/or connects the solar photovoltaic plant 200 to the electricity grid 188 through a high voltage connection.

The wind power plant 220 (Figure 8) preferably comprises a wind farm 222 comprising wind turbines 221 (schematically shown) in which motion energy from wind is converted to electrical energy, a battery storage system 224 in which energy is stored and a transformer device 226 from which the energy is sent to the electricity grid 188. The transformer device 226 of the wind power plant preferably works as the transformer device of a solar photovoltaic plant 200.

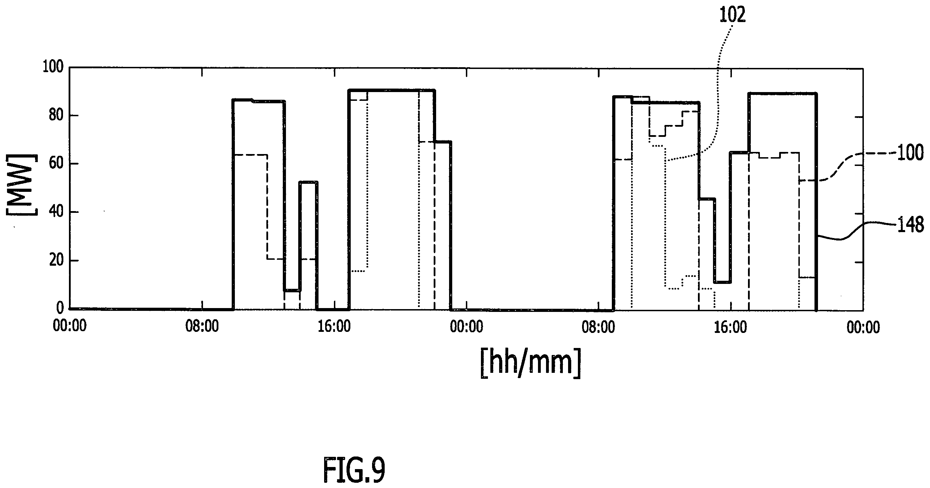

In the diagram in Figure 9, on the x axis an hour of the day [hh/mm] is plotted, and on the y axis electrical power in megawatt (MW) is plotted. In the diagram, the graphs for the set of forecasted variables 102 (dotted curve), the energy demand according to a perfect forecast 148 (continuous curve) and the prediction of the energy demand 100 (broken curve), obtained by the embodiment of the method described in connection with Figures 1 to 3 are shown.

As can be seen from the respective curves, the prediction of the energy demand 100 is in most cases, i.e., for most time steps, closer to the energy demand according to a perfect forecast 148 than the set of forecasted variables 102.

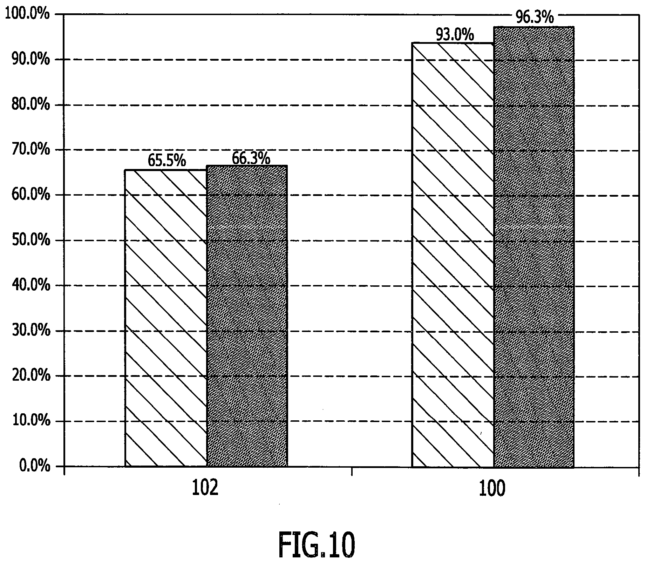

In Figure 10, the accuracy of the set of forecasted variables 102 (left two blocks) and the prediction of the energy demand 100 obtained with an embodiment of the method as described in connection with Figures 1 to 3 (right two blocks) is shown for one year (stripes) and another year (dark) with respect to the energy demand according to a perfect forecast of the respective year 148.

Figure 10 illustrates that the accuracy for the prediction of the energy demand 100 is higher than the accuracy of the set of forecasted variables 102 obtained from the optimization algorithm 107, in particular at least 1.4 times higher.

The method for predicting an energy demand 100 is preferably performed by a data processing system 230 as indicated in Figure 1. The data processing system 230 preferably comprises an apparatus and/or a device or is built thereof.

### List of reference numerals

- 100: prediction of an energy demand
- 101: renewable power plant with a storage
- 102: set of forecasted variables
- 103: uncertainty post-processing algorithm
- 104: machine learning techniques
- 105: uncertainty post-processing phase
- 106: optimization algorithm device
- 107: optimization algorithm
- 108: set of uncertainty-based variables
- 110: set of weather forecast variables
- 114: set of electricity price forecast variables
- 116: forecasted schedule
- 118: training data set
- 120: machine learning device
- 122: development phase
- 123: historical data
- 124: implementation phase
- 125: artificial intelligence device
- 126: learning system algorithm
- 127: decision pattern
- 128: set of deviation-to-mean-based variables
- 130: set of deviation-to-persistence-based variables
- 132: set of day-of-the-year-based variables
- 134: set of time-step-priority-based variables
- 135: testing data set
- 136: set of deviation-to-perfect-based variables
- 138: deviation-to-mean variables
- 140: deviation-to-persistence variables
- 142: day-of-the-year variables
- 144: time-step-priority variables
- 146: deviation-to-perfect variables
- 148: energy demand according to a perfect forecast
- 150: learning system evaluation algorithm
- 152: predicted deviation
- 154: adjustment algorithm
- 155: adjustment algorithm device
- 156: final electricity delivery schedule
- 158: class
- 159: cluster
- 160: class definition algorithm
- 162: class definition algorithm device
- 164: fuzzy c-mean clustering algorithm
- 165: fuzzy c-mean clustering algorithm device
- 166: decision tree building algorithm
- 167: decision tree building algorithm device
- 168: decision tree
- 170: decision tree pruning algorithm
- 171: decision rules extraction algorithm
- 172: decision tree pruning algorithm device
- 173: decision rules extraction algorithm device
- 174: classification algorithm
- 176: classification algorithm device
- 177: decision tree interference algorithm
- 178: decision tree interference algorithm device
- 180: concentrated solar power plant
- 182: solar field
- 184: power block device
- 186: thermal storage system
- 188: electricity grid
- 200: solar photovoltaic plant
- 202: solar field
- 204: photovoltaic module
- 206: battery storage system
- 208: inverter device
- 220: wind power plant
- 221: wind turbine
- 222: wind farm
- 224: battery storage system
- 226: transformer device
- 230: data processing system

## Claims

1. Method for predicting an energy demand (100) for operating a renewable power plant with a storage (101) using a machine learning device (120), wherein the method comprises:
- generating a set of forecasted variables (102) based on at least one set of uncertainty-based variables (108) by using an optimization algorithm (107); and
- uncertainty post-processing (105) of the set of forecasted variables (102) using machine learning techniques (104), wherein the machine learning techniques (104) are performed by a machine learning device (120) that makes use of historical data (123) relating to at least one energy demand according to a perfect forecast (148) in the past,
wherein training data sets (118) for a development phase (122) within the uncertainty post-processing (105) comprise a set of deviation-to-mean-based variables (128), a set of deviation-to-persistence-based variables (130) and a set of deviation-to-perfect-based variables (136), and wherein in a development phase (122) of the uncertainty post-processing (105) the machine learning device (120) is trained by using one or more training data sets (118) as input.

2. Method according to Claim 1, wherein the optimization algorithm (107) is performed by an optimization algorithm device (106) and a set of weather forecast variables (110) and/or a set of electricity price forecast variables (114) are used as input for the optimization algorithm device (106).

3. Method according to any one of the preceding Claims, wherein predictive modeling techniques are used by the machine learning device (120).

4. Method according to any one of the preceding Claims, wherein the uncertainty post-processing (105) comprises an implementation phase (124) in which the machine learning device (120) is implemented for predicting a deviation (152) of the set of forecasted (102) variables from a future energy demand according to a perfect forecast (148).

5. Method according to any one of the preceding Claims, wherein the machine learning device (120) is trained in that deviations of at least one predicted set of variables (136) and at least one energy demand according to a perfect forecast (148) from the past are compared.

6. Method according to any one of the preceding Claims, wherein in the development phase (122) of the uncertainty post-processing (105) a decision tree (168) is built and/or neural networks are used.

7. Method according to any one of the preceding Claims, wherein training data sets (118) for the development phase (122) within the uncertainty post-processing (105) comprise one or more of the following sets of variables: a set of day-of-the-year-based variables (132), a set of time-step-priority-based variables (134).

8. Method according to any one of the preceding Claims, wherein in the development phase (122) within the uncertainty post-processing (105) training data sets (118) are used by the machine learning device (120) for determining a correlation to a set of forecasted variables (102) and its deviation from an energy demand according to a perfect forecast (148).

9. Method according to any one of the preceding Claims, wherein the development phase (122) in which a machine learning device (120) is trained is repeated, in particular with varying training data sets (118), in regular intervals.

10. Method according to any one of the preceding Claims, wherein in an implementation phase (124) of the uncertainty post-processing (124), one or more testing data sets (135) are used as an input for a machine learning device (120), influencing decision making in the uncertainty post-processing (105).

11. Method according to claim 10, wherein testing data sets (135) for the implementation phase (124) within the uncertainty post-processing (105) comprise one or more of the following sets of variables: a set of deviation-to-mean-based variables (128), a set of deviation-to-persistence-based variables (130), a set of day-of-the-year-based variables (132) and a set of time-step-priority-based variables (134).

12. Method according to of any one of the preceding Claims, wherein in an implementation phase (124) within the uncertainty post-processing (105) a predicted deviation (152) of the set of forecasted variables (102) is calculated by a machine learning device (120) and wherein the predicted deviation (152) and the set of forecasted variables (102) are used as an input for an adjustment algorithm (154) performed by an adjustment algorithm device (155).

13. Method according to any one of the preceding Claims, wherein the renewable power plant with a storage (101) is a concentrated solar power plant (180) with storage (186), a solar photovoltaic plant (200) with storage (206) or a wind power plant (220) with storage (224).

14. Data processing system (230) adapted for carrying out the method of any one of Claims 1 to 13.

15. Renewable power plant with a storage (101) operated according to a prediction of an energy demand (100) according to a method of any one of Claims 1 to 13 and/or comprising the data processing system (230) of Claim 14.

## Patentansprüche

1. Verfahren zum Prädizieren eines Energiebedarfs (100) zum Betreiben einer Erneuerbare-Energien-Anlage mit einem Speicher (101) unter Verwendung einer Machine-Learning-Vorrichtung (120), wobei das Verfahren umfasst:
- Erzeugen eines Satzes von prognostizierten Variablen (102) auf Basis mindestens eines Satzes von unsicherheitsbasierten Variablen (108) unter Verwendung eines Optimierungsalgorithmus (107); und
- Unsicherheits-Post-Processing (105) des Satzes von prognostizierten Variablen (102) unter Verwendung von Machine-Learning-Techniken (104), wobei die Machine-Learning-Techniken (104) von einer Machine-Learning-Vorrichtung (120) durchgeführt werden, welche historische Daten (123) betreffend mindestens einen Energiebedarf gemäß einer perfekten Prognose (148) in der Vergangenheit heranzieht,
wobei Trainingsdatensätze (118) für eine Entwicklungsphase (122) innerhalb des Unsicherheits-Post-Processing (105) einen Satz von auf der Abweichung vom Mittelwert basierten Variablen (128), einen Satz von auf der Abweichung von der Persistenz basierten Variablen (130) und einen Satz von auf der Abweichung vom Perfekten basierten Variablen (136) umfasst, und wobei in einer Entwicklungsphase (122) des Unsicherheits-Post-Processing (105) die Machine-Learning-Vorrichtung (120) unter Verwendung eines oder mehrerer Trainingsdatensätze (118) als Eingabe trainiert wird.

2. Verfahren nach Anspruch 1, wobei der Optimierungsalgorithmus (107) von einer Optimierungsalgorithmus-Vorrichtung (106) ausgeführt wird und ein Satz von Wetterprognose-Variablen (110) und/oder ein Satz von Elektrizitätspreisprognose-Variablen (114) als Eingabe für die Optimierungsalgorithmus-Vorrichtung (106) verwendet werden.

3. Verfahren nach einem der voranstehenden Ansprüche, wobei prädiktive Modellierungstechniken von der Machine-Learning-Vorrichtung (120) verwendet werden.

4. Verfahren nach einem der voranstehenden Ansprüche, wobei das Unsicherheits-Post-Processing (105) eine Implementierungsphase (124) umfasst, in welcher die Machine-Learning-Vorrichtung (120) implementiert wird zum Prädizieren einer Abweichung (152) des Satzes von prognostizierten (102) Variablen von einem zukünftigen Energiebedarf gemäß einer perfekten Prognose (148).

5. Verfahren nach einem der voranstehenden Ansprüche, wobei die Machine-Learning-Vorrichtung (120) dadurch trainiert wird, dass Abweichungen mindestens eines prognostizierten Satzes von Variablen (136) und mindestens eines Energiebedarfs gemäß einer perfekten Prognose (148) aus der Vergangenheit verglichen werden.

6. Verfahren nach einem der voranstehenden Ansprüche, wobei in der Entwicklungsphase (122) des Unsicherheits-Post-Processing (105) ein Entscheidungsbaum (168) erstellt wird und/oder neuronale Netzwerke verwendet werden.

7. Verfahren nach einem der voranstehenden Ansprüche, wobei Trainingsdatensätze (118) für die Entwicklungsphase (122) innerhalb des Unsicherheits-Post-Processing (105) einen oder mehrere der folgenden Sätze von Variablen umfassen: einen Satz von Tag-des-Jahres-basierten Variablen (132), einen Satz von Zeitschritt-Prioritäts-basierten Variablen (134).

8. Verfahren nach einem der voranstehenden Ansprüche, wobei in der Entwicklungsphase (122) innerhalb des Unsicherheits-Post-Processing (105) Trainingsdatensätze (118) von der Machine-Learning-Vorrichtung (120) verwendet werden, um eine Korrelation zu einem Satz von prognostizierten Variablen (102) und dessen Abweichung von einem Energiebedarf gemäß einer perfekten Prognose (148) zu bestimmen.

9. Verfahren nach einem der voranstehenden Ansprüche, wobei die Entwicklungsphase (122), in welcher eine Machine-Learning-Vorrichtung (120) trainiert wird, in regelmäßigen Intervallen wiederholt wird, insbesondere mit variierenden Trainingsdatensätzen (118).

10. Verfahren nach einem der voranstehenden Ansprüche, wobei in einer Implementierungsphase (124) des Unsicherheits-Post-Processing (124) ein oder mehrere Testdatensätze (135) als eine Eingabe für eine Machine-Learning-Vorrichtung (120) verwendet werden, welche eine Entscheidungsfindung in dem Unsicherheits-Post-Processing (105) beeinflussen.

11. Verfahren nach Anspruch 10, wobei Testdatensätze (135) für die Implementierungsphase (124) innerhalb des Unsicherheits-Post-Processing (105) einen oder mehrere der folgenden Sätze von Variablen umfassen: einen Satz von auf der Abweichung vom Mittelwert basierten Variablen (128), einen Satz von auf der Abweichung von der Persistenz basierten Variablen (130), einen Satz von Tag-des-Jahres-basierten Variablen (132) und einen Satz von Zeitschritt-Prioritäts-basierten Variablen (134).

12. Verfahren nach einem der voranstehenden Ansprüche, wobei in einer Implementierungsphase (124) innerhalb des Unsicherheits-Post-Processing (105) eine prädizierte Abweichung (152) des Satzes von prognostizierten Variablen (102) mittels einer Machine-Learning-Vorrichtung (120) berechnet wird und wobei die prädizierte Abweichung (152) und der Satz von prognostizierten Variablen (102) als eine Eingabe für einen Anpassungsalgorithmus (154) verwendet werden, welcher von einer Anpassungsalgorithmus-Vorrichtung (155) ausgeführt wird.

13. Verfahren nach einem der voranstehenden Ansprüche, wobei die Erneuerbare-Energien-Anlage mit einem Speicher (101) eine konzentrierende Solarkraftanlage (180) mit Speicher (186), eine Photovoltaik-Solaranlage (200) mit Speicher (206) oder eine Windkraftanlage (220) mit Speicher (224) ist.

14. Datenverarbeitungssystem (230), mit dem das Verfahren nach einem der Ansprüche 1 bis 13 durchführbar ist.

15. Erneuerbare-Energien-Anlage mit einem Speicher (101), welche gemäß einer Prädiktion eines Energiebedarfs (100) nach einem Verfahren nach einem der Ansprüche 1 bis 13 betrieben wird und/oder das Datenverarbeitungssystem (230) nach Anspruch 14 umfasst.

## Revendications

1. Méthode de prédiction d'une demande en énergie (100) pour l'exploitation d'une centrale d'énergie renouvelable avec un stockage (101) utilisant un dispositif d'apprentissage automatique (120), dans laquelle la méthode comprend :
- la génération d'un ensemble de variables prévisionnelles (102) sur la base d'au moins un ensemble de variables basées sur l'incertitude (108) en utilisant un algorithme d'optimisation (107) ; et
- le post-traitement d'incertitude (105) de l'ensemble de variables prévisionnelles (102) à l'aide de techniques d'apprentissage automatique (104), dans laquelle les techniques d'apprentissage automatique (104) sont réalisées par un dispositif d'apprentissage automatique (120) qui utilise des données historiques (123) relatives à au moins une demande en énergie selon une prévision parfaite (148) dans le passé,
dans laquelle des ensembles de données d'entraînement (118) pour une phase de développement (122) au sein du post-traitement d'incertitude (105) comprennent un ensemble de variables basées sur l'écart par rapport à la moyenne (128), un ensemble de variables basées sur l'écart par rapport à la persistance (130) et un ensemble de variables basées sur l'écart par rapport à la perfection (136), et dans laquelle, lors d'une phase de développement (122) du post-traitement d'incertitude (105), le dispositif d'apprentissage automatique (120) est entraîné en utilisant un ou plusieurs ensembles de données d'entraînement (118) en tant qu'entrée.

2. Méthode selon la revendication 1, dans laquelle l'algorithme d'optimisation (107) est réalisé par un dispositif d'algorithme d'optimisation (106) et un ensemble de variables de prévision météorologique (110) et/ou un ensemble de variables de prévision de prix de l'électricité (114) sont utilisés en tant qu'entrée pour le dispositif d'algorithme d'optimisation (106).

3. Méthode selon l'une quelconque des revendications précédentes, dans laquelle des techniques de modélisation prédictive sont utilisées par le dispositif d'apprentissage automatique (120).

4. Méthode selon l'une quelconque des revendications précédentes, dans laquelle le post-traitement d'incertitude (105) comprend une phase de mise en œuvre (124) pendant laquelle le dispositif d'apprentissage automatique (120) est mis en œuvre pour prédire un écart (152) de l'ensemble de variables prévisionnelles (102) par rapport à une demande en énergie future selon une prévision parfaite (148).

5. Méthode selon l'une quelconque des revendications précédentes, dans laquelle le dispositif d'apprentissage automatique (120) est entraîné en ce sens que des écarts d'au moins un ensemble prédit de variables (136) et d'au moins une demande en énergie selon une prévision parfaite (148) du passé sont comparés.

6. Méthode selon l'une quelconque des revendications précédentes, dans laquelle, lors de la phase de développement (122) du post-traitement d'incertitude (105), un arbre de décision (168) est élaboré et/ou des réseaux neuronaux sont utilisés.

7. Méthode selon l'une quelconque des revendications précédentes, dans laquelle des ensembles de données d'entraînement (118) pour la phase de développement (122) au sein du post-traitement d'incertitude (105) comprennent un ou plusieurs des ensembles de variables suivants : un ensemble de variables basées sur le jour de l'année (132), un ensemble de variables basées sur la priorité de pas temporel (134).

8. Méthode selon l'une quelconque des revendications précédentes, dans laquelle, lors de la phase de développement (122) au sein du post-traitement d'incertitude (105), des ensembles de données d'entraînement (118) sont utilisés par le dispositif d'apprentissage automatique (120) pour déterminer une corrélation avec un ensemble de variables prévisionnelles (102) et son écart par rapport à une demande en énergie selon une prévision parfaite (148).

9. Méthode selon l'une quelconque des revendications précédentes, dans laquelle la phase de développement (122) pendant laquelle un dispositif d'apprentissage automatique (120) est entraîné est répétée, en particulier avec des ensembles de données d'entraînement (118) qui varient, à intervalles réguliers.

10. Méthode selon l'une quelconque des revendications précédentes, dans laquelle, lors d'une phase de mise en œuvre (124) du post-traitement d'incertitude (124), un ou plusieurs ensembles de données de test (135) sont utilisés en tant qu'entrée pour un dispositif d'apprentissage automatique (120), influençant la prise de décision lors du post-traitement d'incertitude (105).

11. Méthode selon la revendication 10, dans laquelle les ensembles de données de test (135) pour la phase de mise en œuvre (124) au sein du post-traitement d'incertitude (105) comprennent un ou plusieurs des ensembles de variables suivants : un ensemble de variables basées sur l'écart par rapport à la moyenne (128), un ensemble de variables basées sur l'écart par rapport à la persistance (130), un ensemble de variables basées sur le jour de l'année (132) et un ensemble de variables basées sur la priorité de pas temporel (134).

12. Méthode selon l'une quelconque des revendications précédentes, dans laquelle, lors d'une phase de mise en œuvre (124) au sein du post-traitement d'incertitude (105), un écart prédit (152) de l'ensemble de variables prévisionnelles (102) est calculé par un dispositif d'apprentissage automatique (120) et dans laquelle l'écart prédit (152) et l'ensemble de variables prévisionnelles (102) sont utilisés en tant qu'entrée pour un algorithme d'ajustement (154) réalisé par un dispositif d'algorithme d'ajustement (155).

13. Méthode selon l'une quelconque des revendications précédentes, dans laquelle la centrale d'énergie renouvelable avec un stockage (101) est une centrale d'énergie solaire concentrée (180) avec un stockage (186), une centrale photovoltaïque solaire (200) avec un stockage (206) ou une centrale d'énergie éolienne (220) avec un stockage (224).

14. Système de traitement de données (230) adapté pour effectuer la méthode de l'une quelconque des revendications 1 à 13.

15. Centrale d'énergie renouvelable avec un stockage (101) exploitée selon une prédiction d'une demande en énergie (100) selon une méthode de l'une quelconque des revendications 1 à 13 et/ou comprenant le système de traitement de données (230) de la revendication 14.
